# EUROPEAN PATENT APPLICATION

(11) **EP 4 742 631 A1**
(43) Date of publication of application: **13.05.2026**
(21) Application number: 24211770.3
(22) Date of filing: 08.11.2024
(51) Int. Cl.: H04L 67/12, H04W 4/70

(54) **DEVICE AND METHOD FOR COLLECTING DATA FROM A PLURALITY OF INTERNET OF THINGS DEVICES**

(71) Applicant: NTT DOCOMO, INC., Tokyo 100-6150 (JP)
(72) Inventor: NORMANN, Henrik, 80687 Munich (DE); SAMA, Malla Reddy, 80687 Munich (DE); ZUGENMAIER, Alf, Tokyo, 100-6150 (JP); ZHAO, Yinhui, Tokyo, 100-6150 (JP); MINOKUCHI, Atsushi, Tokyo, 100-6150 (JP)
(74) Representative: Viering, Jentschura & Partner mbB Patent- und Rechtsanwälte

(57) **Abstract**

According to one embodiment, a method for collecting data from a plurality of Internet of Things devices is described, comprising receiving, by an Ambient IoT (Internet of Things) core network, a service request directed to the Ambient IoT devices from a mobile communication network by an Ambient IoT core network, forwarding, by the Ambient IoT core network, the service request to the Ambient IoT devices, receiving, by the Ambient IoT core network, responses to the service request from the Ambient IoT devices and forwarding, by the Ambient IoT core network, the responses to the mobile communication network and blocking, by the Ambient IoT core network, forwarding responses to the mobile communication network in reaction to a determination that performing the service request has been completed.

## Description

The present disclosure relates to devices and methods for collecting data from a plurality of Internet of Things devices.

Ambient IoT (Internet of Things) refers to an ecosystem of a large number of objects in which every item is connected into a wireless sensor network using low-cost self-powered sensor nodes.

Ambient IoT devices are low complexity devices that can provide telemetric data in a competitive way. Some Ambient IoT devices may be capable of storing energy while others can absorb energy to function in the moment. Due to an Ambient IoT device's low complexity, security supported by the Ambient IoT device may be considerably lower than other devices connecting to a 5G (fifth generation) communication system. Ambient IoT devices may be deployed in high density. A 5G communication system supports providing connectivity for different kind of devices with similar security capabilities. As technologies evolve, Ambient IoT devices may be connected to 5G communication systems, in large quantities. However, Ambient IoT devices may cause signalling storms on a network function in response to a trigger, in particular when caused by a malicious user, e.g. executing a replay attack. A signalling storm that may degrade or deny service to other wireless devices reliant on the affected network function and/or base station.

Accordingly, approaches to avoid excessive signalling data caused by Ambient IoT devices in a mobile communication network are desirable.

According to one embodiment, a method for collecting data from a plurality of Internet of Things devices is provided, comprising
- Receiving, by an Ambient IoT (Internet of Things) core network, a service request directed to the Ambient IoT devices from a mobile communication network by an Ambient IoT core network
- Forwarding, by the Ambient IoT core network, the service request to the Ambient IoT devices
- Receiving, by the Ambient IoT core network, responses to the service request from the Ambient IoT devices and
- Forwarding, by the Ambient IoT core network, the responses to the mobile communication network and blocking, by the Ambient IoT core network, forwarding responses to the mobile communication network in reaction to a determination that performing the service request has been completed.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication network comprising a set of ambient IoT (Internet of Things) devices.
Figure 2 illustrates an exemplary use case.
Figure 3 illustrates an AF(Application Function)-based approach according to various embodiments.
Figure 4 illustrates the AF-based approach of figure 3 in more detail.
Figure 5 illustrates a UE(User Equipment, i.e. mobile terminal or wireless device)-based approach according to various embodiments.
Figure 6 illustrates the UE-based approach of figure 5 in more detail.
Figure 7 shows a message flow diagram for the configuration of a UE with a policy rule indicating to the UE the identity of a dedicated Ambient IoT core network to which to connect to communicate with one or more Ambient IoT devices.
Figure 8 shows a flow diagram illustrating a method for collecting data from a plurality of Internet of Things devices according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for collecting data from a plurality of Internet of Things devices, comprising:
   - Receiving, by an Ambient Internet of Things core network, a service request directed to the Ambient Internet of Things devices from a mobile communication network by an Ambient Internet of Things core network
   - Forwarding, by the Ambient Internet of Things core network, the service request to the Ambient Internet of Things devices
   - Receiving, by the Ambient Internet of Things core network, responses to the service request from the Ambient Internet of Things devices and
   - Forwarding, by the Ambient Internet of Things core network, the responses to the mobile communication network and blocking, by the Ambient Internet of Things core network, forwarding responses to the mobile communication network in reaction to a determination that performing the service request has been completed.
Example 2 is the method of example 1, wherein the mobile communication network acts as underlay network for an Ambient Internet of Things network comprising the Ambient Internet of Things core network and wherein the Ambient Internet of Things network acts as overlay network.
Example 3 is the method of example 1 or 2, wherein the mobile communication network (e.g. a core network of it) acts as an application function towards the Ambient Internet of Things core network and/or the Ambient Internet of Things core network treats the mobile communication network (e.g. a core network of it) as an application function.
Example 4 is the method of any one of examples 1 to 3, wherein the Ambient Internet of Things core network acts as an application function towards the mobile communication network (e.g. a core network of it) and/or the mobile communication network (e.g. a core network of it) treats the Ambient Internet of Things core network as an application function.
Example 5 is the method of any one of examples 1 to 4, wherein the service request is a request to read data from and/or write data to the Ambient Internet of Things devices and/or a request for the Ambient Internet of Things devices to identify themselves.
Example 6 is the method of any one of examples 1 to 5, comprising receiving the service request by the Ambient Internet of Things core network from an application function via the mobile communication network.
Example 7 is the method of any one of examples 1 to 6, comprising receiving the service request by the Ambient Internet of Things core network from a mobile terminal via the mobile communication network.
Example 8 is the method of any one of examples 1 to 7, comprising configuring the mobile terminal with one or more Ambient Internet of Things network identifications to which it should direct Ambient Internet of Things service requests (i.e. identifying one or more Ambient Internet of Things networks to which the mobile terminal should send Ambient Internet of Things service requests, i.e. which the mobile terminal should indicate as target in an Ambient Internet of Things service request, i.e. to which one or more Ambient Internet of Things networks to connect; the service request is then forwarded by the mobile communication network to the Ambient Internet of Things core network in reaction to the service request comprising an Ambient Internet of Things network identification (as included by the mobile terminal) identifying an Ambient Internet of Things network comprising the Ambient Internet of Things core network).
Example 9 is the method of example 8, comprising configuring the mobile terminal with one or more Ambient Internet of Things network identifications by means of a routing policy rule (e.g. a URSP (UE Route Selection Policy) rule).
Example 10 is the method of any one of examples 1 to 9, comprising receiving the service request from the mobile communication network by the Ambient Internet of Things core network via a network exposure function of the mobile communication network and a network exposure function of the Ambient Internet of Things core network and forwarding the responses from the Ambient Internet of Things core network to the mobile communication network via the network exposure function of the Ambient Internet of Things core network and the network exposure function of the mobile communication network.
Example 11 is the method of any one of examples 1 to 10, comprising determining that the service request has been fulfilled in reaction to a predetermined time window for receiving responses to the service request having elapsed, the forwarded responses fulfilling a service request fulfilment criterion and/or a predetermined number of responses to the service request having been forwarded by the Ambient Internet of Things network.
Example 12 is the method of any one of examples 1 to 11, wherein the blocking of forwarding of responses is performed by an Ambient Internet of Things function of the Ambient Internet of Things core network (e.g. in the AF-based embodiment) or an Access and Mobility Management Function of the Ambient Internet of Things core network (e.g. in the UE-based embodiment).
Example 13 is the method of any one of examples 1 to 12, comprising, in reaction to the reception of the service request, storing a transaction identification specifying an instance of the service request by the Ambient Internet of Things core network, forwarding the responses from the Ambient Internet of Things network to the mobile communication network as long as the transaction identification is still stored and not marked as handled and deleting the transaction identification or marking the transaction identification as handled in reaction to determining that the service request has been completed.
Example 14 is an Ambient Internet of Things network controlling component, configured to perform the method of any one of examples 1 to 13.

It should be noted that one or more of the features of any of the examples above may be combined with any one of the other examples. In particular, the Examples described in context of the device are analogously valid for the method and vice versa.

According to further embodiments, a computer program and a computer readable medium comprising instructions, which, when executed by a computer, make the computer perform the method of any one of the above Examples are provided.

In the following, various examples will be described in more detail.

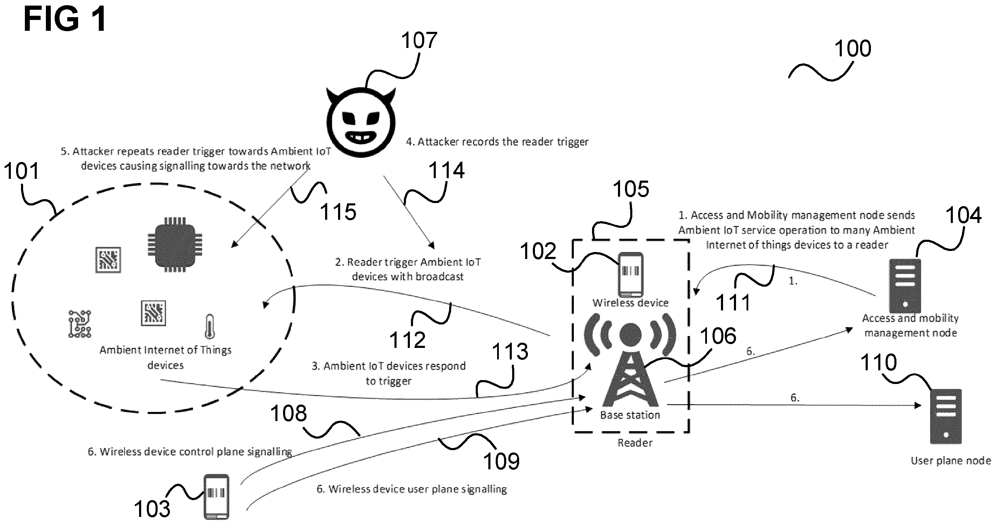

Figure 1 shows a communication network 100 (based on a mobile communication network) comprising a set of Ambient IoT (Internet of Things) devices 101.

Ambient IoT (AIoT) devices are devices of relatively low complexity and therefore may have lower security capabilities and be susceptible to numerous attacks such as replay attacks. The communication network 100 (in particular the mobile communication network it includes) may end up overloaded due to the introduction of Ambient IoT devices and hence affect services negatively of mobile terminals 102, 103 (also referred to UEs (User Equipments) herein in line with 3GPP (Third Generation Partnership Project).

For example, in 111, an Access and Mobility management node (e.g. an AMF(Access and Mobility Management Function) of the mobile communication network) 104 sends an Ambient IoT service operation request (to be directed to all the Ambient IoT devices 101) to a reader 105. An Ambient IoT service operation request is also referred to as Ambient IoT service request herein. The reader may be implemented
- by a base station 106 of the mobile communication network, i.e. a PLMN (public land mobile network), in case it has an Ambient IoT reader capability (i.e. it supports communication with Ambient IoT devices)
- by a mobile terminal 102 which served by the base station 106, i.e. the mobile terminal 102 is supplied with the Ambient IoT service request by the base station 106 and sends it to the Ambient IoT devices 101 (e.g. in case that a base station with Ambient IoT reader capability is not available or out of reach of the Ambient IoT device(s)).

In 112, the reader 105 triggers the ambient IoT devices 101 to perform the information using a broadcast (via the base station 106).

In 113, the ambient IoT devices 101 respond to the trigger. This completes the handling of the service request.

In the example of figure 1, however, an attacker 107 (using a wireless communication device) records the trigger in 114 and, in 115 repeats the trigger one or more times towards the ambient IoT devices 101.

This causes the ambient IoT devices 101 to respond again to the trigger one or more times causing a high amount of signalling traffic (i.e. a signalling storm) which may overload network entities such as core network function of the PLMN and thus cause, by the high load, high delays or even errors in control plane signalling 108 and/or user plane signalling 109 of one or more other wireless terminals 103 (e.g. to the Access and Mobility management node 104 or to a user plane node 110, respectively) or base station leading to delayed or even denied services.

According to various embodiments, an application function (AF) or a UE (i.e. a mobile terminal) interacts with a dedicated Ambient IoT network via a PLMN to execute an Ambient IoT service request (referred to as AF-based approach and UE-based approach, respectively, in the following) in a manner to avoid signalling storms as described above. Specifically, the Ambient IoT network may block redundant traffic. For example, the dedicated Ambient IoT network is an overlay network of the PLMN and the PLMN is the underlay network. This provides easy remote access to the ambient IoT network via a PLMN and yet a clear separation between ordinary UEs (as the UE 103 in the example of figure 1) and Ambient IoT devices.

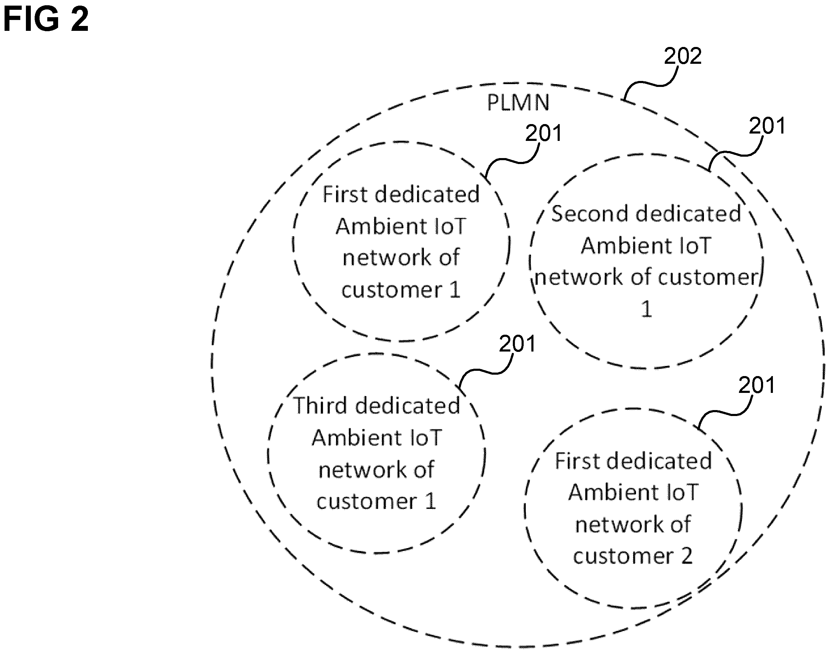

Figure 2 illustrates an exemplary use case.

An operator may deploy one or several dedicated Ambient IoT networks 201 on behalf of one or more customers as overlay network(s) of a (e.g. 5G) PLMN 202. For example, each dedicated Ambient IoT network 201 may comprise Ambient IoT devices located in different premises of the customer e.g., a factory, a warehouse, a store etc.

Each customer wishes to interact with the one or more dedicated Ambient IoT networks 201 deployed for the customer and the operator wants to avoid service degradation security risks in the PLMN 202.

The (AF-based or UE-based) approach outlined above provides means to isolate Ambient IoT services from other services in the 5G system (implemented by the PLMN 202). This may aid the 5G system to isolate Ambient IoT devices from other wireless devices (as the UE 103 in the example of figure 1) served by the PLMN. Hence, service degradation of wireless devices due to providing Ambient IoT services to customers may be alleviated.

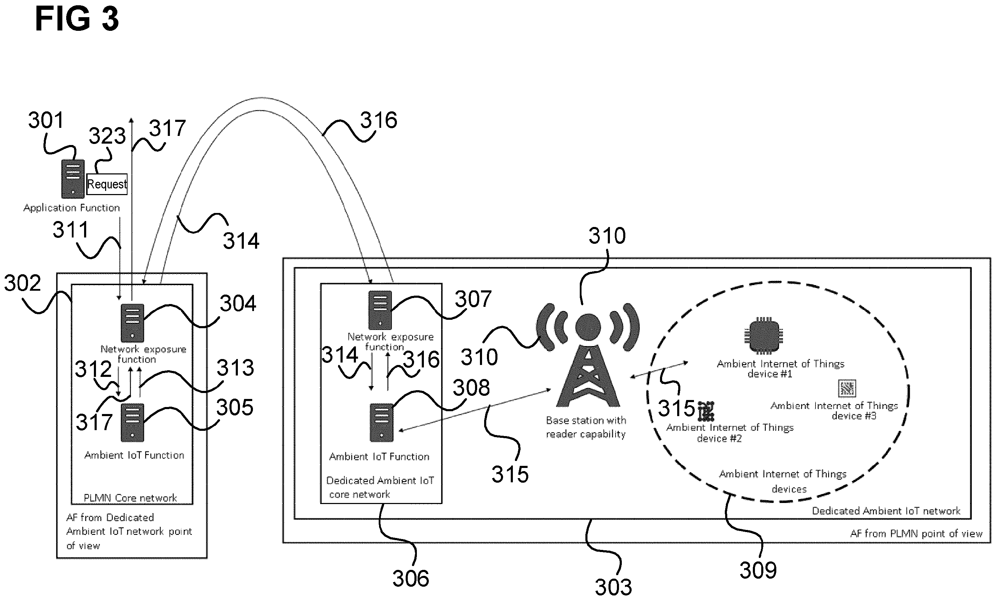

Figure 3 illustrates an AF-based approach according to various embodiments.

In the AF-based approach, an AF 301, a PLMN core network 302 (e.g. corresponding to a core network of the PLMN 202) and a dedicated Ambient IOT network 303 (e.g. corresponding to one of the Ambient IOT networks 201) are involved.

The PLMN core network (CN) 302 may consider the dedicated Ambient IoT network 303 in an abstraction as an AF. The dedicated Ambient IoT network 303 may consider the PLMN core network 302 in an abstraction as an AF.

The Ambient IOT network 303 comprises an Ambient IOT core network 306 which comprises a first network exposure function 307 and an Ambient IoT function (AIOTF) 308.

The PLMN core network 302 comprises a second network exposure function (NEF) 304 and a second Ambient IoT function (AIOTF) 305.

In 311, the AF 301 generates an Ambient IoT service request for the dedicated Ambient IOT network 303 and sends it to the second network exposure function 304.

In 312, the second network exposure function 304 forwards the Ambient IoT service request to the second Ambient IoT function 305 which determines the network exposure function of the dedicated Ambient IoT network 303 (assumed to be the first network exposure function 307).

In 313, the second Ambient IoT function 305 forwards the Ambient IoT service request to the first NEF 307 via the second NEF 304.

In 314, the first NEF 307 forwards the Ambient IoT service request to the Ambient IoT function 308.

In 315, the Ambient IoT function 308 triggers the Ambient IoT service request, i.e. an Ambient IoT operation according to the requested service of the Ambient IoT devices 309 of the dedicated Ambient IoT network 303 via a base station 310 (which may or may not be part of the PLMN) with Ambient IoT reader capability. In reaction to the trigger, the Ambient IoT devices 309 send Ambient IoT service (operation) responses to the first Ambient IoT function 308 via the base station 310 which provides them to the first NEF 307 to be forwarded, in 316, by the first NEF 307 to the second Ambient IoT function 305 via the second NEF 304.

According to various embodiments, the first Ambient IoT function 308 stops forwarding of responses from the Ambient IoT devices 309 when it has determined that the service request has been handled based on a predetermined criterion, e.g. that sufficient responses have been provided by the Ambient IoT devices 309, a time window has elapsed, several successful Ambient IoT device operations as been reached or a quota of successful Ambient IoT device operations has been reached. For example, quota of successful Ambient IoT device operations may refer to the service request comprising a set number of Ambient IoT devices and requiring successful service operation for a threshold value. The first Ambient IoT function 308 may detect that the service request has been handled (based on the criterion) and then block (further) responses from the Ambient IoT devices 309. This avoids an overload of the PLMN core network 302.

In 317, the AF 301 is provided with the Ambient IoT services responses originating from the Ambient IoT network 303 by the second Ambient IoT function 305 via the second NEF 304.

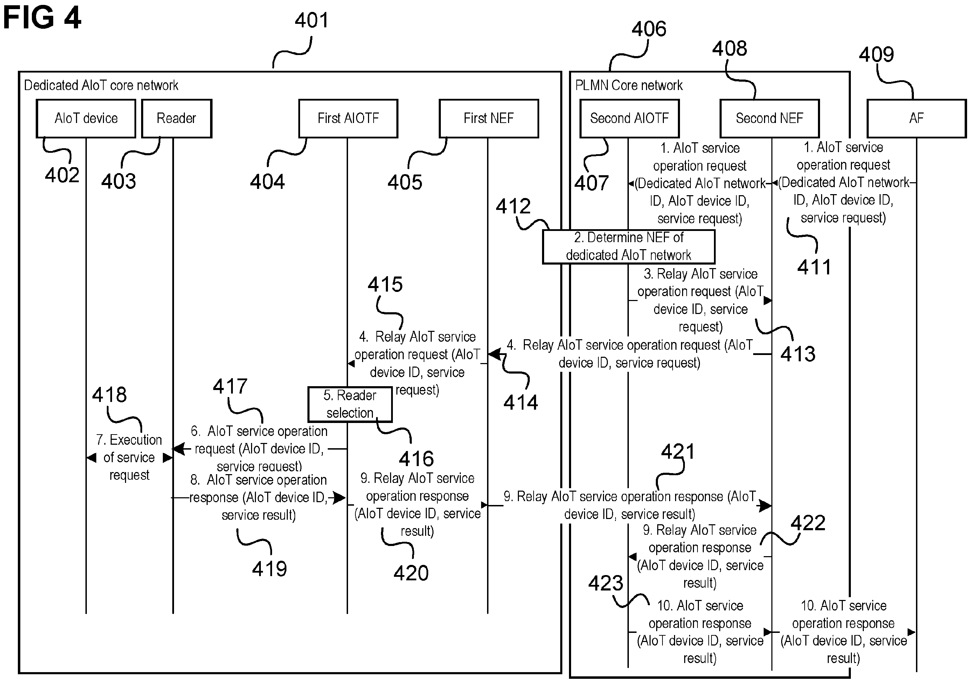

Figure 4 illustrates the AF-based approach of figure 3 in more detail.

As in the example of figure 3, a dedicated Ambient IoT core network 401 which comprises Ambient IoT devices, here represented by one Ambient IoT device 402 for the illustration of the message flow, an Ambient IoT reader 403 (e.g. corresponding to base station 310 but, as described with reference to figure 2 possibly implemented by a mobile terminal), a first Ambient IoT Function 404 and a first network exposure function 405 is connected to a PLMN core network 406 comprising a second Ambient IoT function 407 and a second network exposure function 408. An application function 409 (corresponding to AF 301) is connected to the PLMN core network 406.

In 411, the application function 409 transmits an ambient IoT service (operation) request via the second network exposure function 408 to the second Ambient IoT function 407. The ambient IoT service operation request comprises a dedicated Ambient IoT network ID of the Ambient IoT network comprising the Ambient IoT core network 401, i.e. an identification of the Ambient IoT network of which the Ambient IoT core network 401 is the Ambient IoT core network, one or more Ambient IoT device IDs identifying the Ambient IoT devices to which ambient IoT service operation request is to be directed (e.g. a list of Ambient IoT device IDs containing an Ambient IoT device ID for each Ambient IoT device 402) and a specification of the service that is requested (e.g. want kind of data should be provided).

In 412, the second Ambient IoT function 407 determines the network exposure function of the Ambient IoT core network identified by the dedicated Ambient IoT network ID included in the service request, i.e. identifies the first network exposure function 405 in the present example. This determination is for example done according to a local configuration of the second Ambient IoT function 407 and/or an interaction with the PLMN's UDM (Unified Data Management).

In 413, the second Ambient IoT function 407 relays the Ambient IoT service operation request to the second network exposure function 408 (with the identified first network exposure function 405 and eventually the first Ambient IoT Function 404 as a target) to the second network exposure function 408. The second Ambient IoT function 407 may remove the Dedicated Ambient IoT network ID from the relayed Ambient IoT service operation request (since it is already directed to the first network exposure function 405 and the first Ambient IoT Function 404).

In 414, the second network exposure function 408 relays the Ambient IoT service operation request to the first network exposure function 405 which relays it to the first Ambient IoT Function 404 in 415. For this, a relay capability for Ambient IoT service operations between two network exposure functions (of two core networks, in particular a PLMN (e.g. 5G) core network and an Ambient IoT core network may be introduced).

In 416, the first Ambient IoT Function 404 performs, for each Ambient IoT device identified in the Ambient IoT service operation request, reader selection, i.e. determines which reader to use to communicate with the identified Ambient IoT device ID. In the present example, for the Ambient IoT device 402, this is the reader 403.

In 417, the first Ambient IoT Function 404 sends the Ambient IoT service operation request to the identified reader 403 which executes the Ambient IoT service operation request in 418 together with each Ambient IoT device 402 by communicating with each Ambient IoT device 402 accordingly. The reader 403 forwards each response it receives from each Ambient IoT device 402 to the first Ambient IoT Function 404 in 419.

The first Ambient IoT Function 404 in 420 relays (forwards) the responses to the first network exposure function 405 in 420 but, as explained above, stops forwarding responses when it determines that the service request has been handled (i.e. no further responses need to be received for handling the service request).

The response relayed to the first exposure function 405 are relayed by the first exposure function 405 to the second network exposure function 408 in 421 and the second Ambient IoT Function 407 in 422 which it sends, in 423, to the application function 409 via the second network exposure function 408.

The Dedicated Ambient IoT network ID can for example be an SNPN (stand-alone private network) ID e.g. MNC:MCC:NID or something new like MNC:MCC:companyID:NID etc. (wherein MNC is the Mobile Network Code used to identify a specific mobile network within a country, MCC is the Mobile Country Code that identifies the country of the mobile network and NID is the Network Identifier which is used to identify, discover, select, and control access to specific non-public networks).

It should be noted that each core network 401, 406 can be viewed as an application function of the other one.

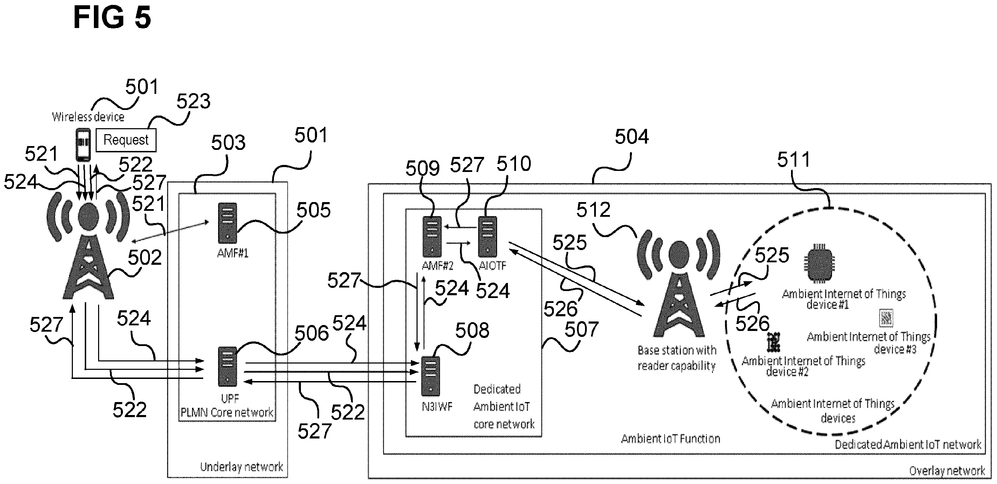

Figure 5 illustrates a UE-based approach according to various embodiments.

A UE 501 is connected via a first base station 502 to a PLMN core network 503 of a PLMN (e.g. corresponding to PLMN 202) acting as underlay network. A dedicated Ambient IOT network 504 (e.g. corresponding to one of the Ambient IOT networks 201) acts as overlay network.

The PLMN core network 503 comprises a first AMF (Access and Mobility Management Function) 505 and a UPF (User Plane Function) 506.

The dedicated Ambient IOT network 504 comprises an Ambient IOT core network 507 which comprises a Non-3GPP Inter-Working Function (N3IWF) 508, a second AMF 509 and an AIOTF 510. The dedicated Ambient IOT network 504 further comprises Ambient IoT devices 511 connected to the Ambient IOT core network 507 via a second base station 512 (which may or may not be part of the PLMN) having Ambient IOT reader capability.

In some deployments, the Ambient IoT core network may comprise of a different constellation of network functions. For example, the different constellation may refer to the Ambient IoT core network comprising of the Ambient IoT Function (AIOTF). In some deployments the UPF may directly interface the AIOTF.

In 521, the UE 501 registers with the PLMN by communication with the first AMF 505 via the first base station 502.

In 522, the UE 501 registers in the dedicated Ambient IOT network 504 (at the Non-3GPP Inter-Working Function 508) via the first base station 502 and the UPF 506.

In 523, an application running on the UE 501 generates an Ambient IoT service request for the Ambient IoT devices 511.

In 524, the UE sends the Ambient IoT service request to the AIOTF 510 via the first base station 502, the UPF 506, the N3IWF 508 and the second AMF 509.

In 525, the AIOTF 510 triggers the Ambient IoT service request, i.e. an Ambient IoT operation according to the requested service of the Ambient IoT devices 511 of the dedicated Ambient IoT network 504 via the second base station 512. In reaction to the trigger, the Ambient IoT devices 511, in 526 send Ambient IoT service responses to the Ambient IoT function 510 via the second base station 412 which forwards them to the second AMF 509.

In 527, the second AMF 509 forwards the Ambient IoT service responses to the UE 501.

According to various embodiments, the AIOTF 510 or the second AMF 509 stops forwarding of responses from the Ambient IoT devices 511 when it has determined that the service request has been handled based on a predetermined criterion, e.g. that sufficient responses have been provided by the Ambient IoT devices 511 or a time window has elapsed. The AIOTF 510 or the second AMF 509 may detect that the service request has been handled (based on the criterion) and then block (further) responses from the Ambient IoT devices 511. This avoids an overload of the PLMN core network 503.

The application running on the UE 501 can directly interact with the AIOTF 510 instead of via an AF. A URSP (User Equipment Route Selection Policy) rule can be set or updated to indicate to the UE 501 which Dedicated Ambient IoT network it needs to connect to, e.g. to communicate with a certain set of Ambient IoT devices. For example, the URSP rule may be dynamically updated for an application. For example, dynamically updated may refer to the application connecting to different dedicated Ambient IoT network(s) based on the URSP rule.

In an alternative embodiment to the one shown in figure 5, the N3IWF (Non-3GPP Inter-Working Function) 508 can be removed and the UE 501 can directly connect to the AIOTF. Access control can then be managed in the underlay network with authorization for the UE 501 to connect to the overlay network based on a local configuration and/or secondary authentication. The second AMF 509 may be enhanced with logic for how long to keep the UE 501 in CM(Connection Management)-Connected state, for example in terms of a duration and/or a number of AIoT operations.

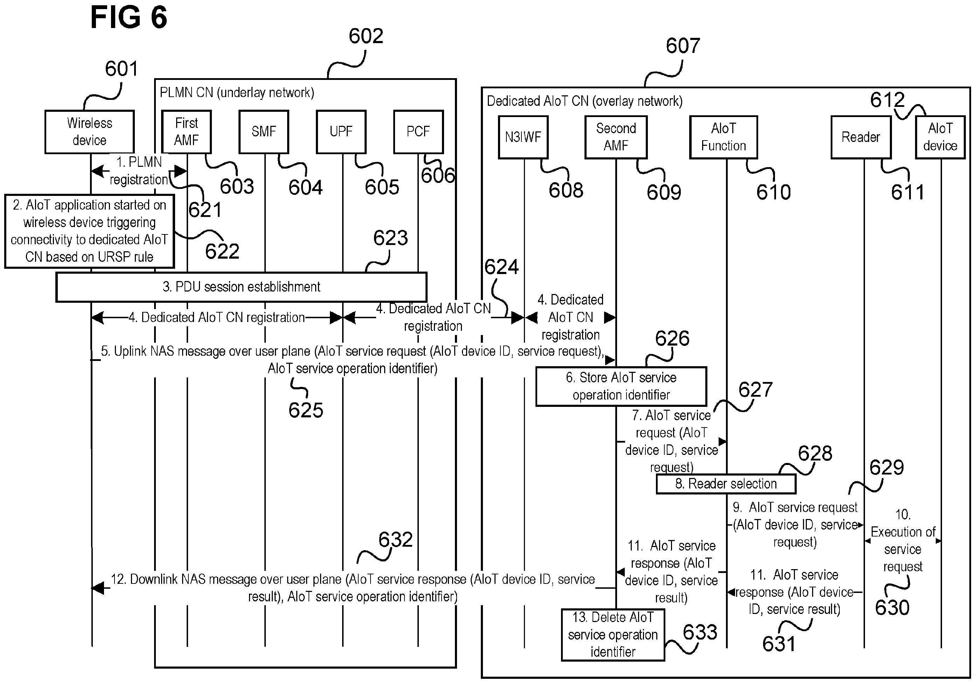

Figure 6 illustrates the UE-based approach of figure 5 in more detail.

As in the example of figure 5, a UE 601 is connected to a PLMN core network 602 of a PLMN. The PLMN core network 602 comprises a first AMF (Access and Mobility Management Function) 603, a Session Management Function (SMF) 604, a UPF (User Plane Function) 605 and a Policy Control Function 606.

Further, as in the example of figure 5, the PLMN core network 602 is connected via the UPF 605 to a dedicated Ambient IOT network 607. The dedicated Ambient IOT network 607 comprises a dedicated core Ambient IOT network which comprises a Non-3GPP Inter-Working Function (N3IWF) 608, a second AMF 609 and an AIOTF 610. The dedicated Ambient IOT network 607 further comprises a reader 611 (e.g. corresponding to base station 512 but, as described with reference to figure 5 possibly implemented by a mobile terminal) and Ambient IoT devices, here represented by one Ambient IoT device 612 for the illustration of the message flow.

In this example, the second AMF 609 performs blocking of responses when it has determined that the handling of the service request is complete. In an alternative embodiment, the AIOTF may perform the blocking of responses.

In 621, the UE 601 registers with the PLMN core network 602.

In 622, an Ambient IoT application running on the UE 601 triggers connectivity to the dedicated Ambient IoT network 607 based on a URSP rule with which the UE 601 is configured. For this, the URSP rule may be enhanced to indicate for an application the identity of the dedicated Ambient IoT core network and corresponding N3IWF 608 for the UE 601 to select correct credentials for registration.

In 623, the UE 601 and the PLMN core network 602 perform PDU session establishment for the UE 601.

In 624, the UE 601 registers in the Ambient IoT core network of the Ambient IOT network 607 via the UPF 605.

In 625, the UE 601 transmits an Ambient IoT service (operation) request via the PLMN to the second AMF 609. The Ambient IoT service operation request comprises one or more Ambient IoT device IDs identifying the Ambient IoT devices to which ambient IoT service operation request is to be directed (e.g. a list of Ambient IoT device IDs containing an Ambient IoT device ID for each Ambient IoT device 612) and a specification of the service that is requested. Further, the UE 601 includes an Ambient IoT service operation identifier into the Ambient IoT service request. The Ambient IoT service operation identifier is, similar to a PDU session ID, an identification to keep track of interactions (i.e. in this case a specific instance of a service request). It may be similar to a transaction ID used between an AF and an AIOTF.

In 626, the second AMF 609 stores the Ambient IoT service operation identifier. It may then remove it from the Ambient IoT service operation request.

In 627, the second AMF 609 transmits the Ambient IoT service operation request to the AIOTF 610.

In an example, the second AMF 609 may associate the Ambient IoT service operation request sent to the AIOTF with the Ambient IoT service operation identifier.

In 628, the AIOTF 610 performs, for each Ambient IoT device identified in the Ambient IoT service operation request, reader selection, i.e. determines which reader to use to communicate with the identified Ambient IoT device ID. In the present example, for the Ambient IoT device 612, this is the reader 611.

In 629, the Ambient IoT Function 404 sends the Ambient IoT service operation request to the identified reader 611 which executes the Ambient IoT service operation request in 630 together with each Ambient IoT device 612 by communicating with each Ambient IoT device 612 accordingly. The reader 611 gathers responses from the Ambient IoT devices 512 and sends the responses to the Ambient IoT Function 610 in 631 which the Ambient IoT Function 610 forwards to the second AMF 609 and the second AMF 609 forwards to the UE 601 in 632 wherein it may add the Ambient IoT service operation identifier to the Ambient IoT service operation response.

When the second AMF 609 in 633 determines that no responses need or should be received any more for handling the service request (e.g. a time window has elapsed or all required data has been received), it deletes the Ambient IoT service operation identifier (it had stored). This then leads to the second AMF 609 no longer forwarding responses associated with that service operation identifier (i.e. the blocking may be realized by having a response forwarding entity, here the second AMF 609, only forwarding responses as long as it has a service operation identifier associated with the responses (e.g. indicated in the responses) stored or indicated as being active).

The dedicated Ambient IoT network 607 (in particular the dedicated Ambient IoT core network) works as an overlay to the PLMN 602.

As mentioned above, the 601 triggers connectivity to the dedicated Ambient IoT network 607 based on a URSP rule.

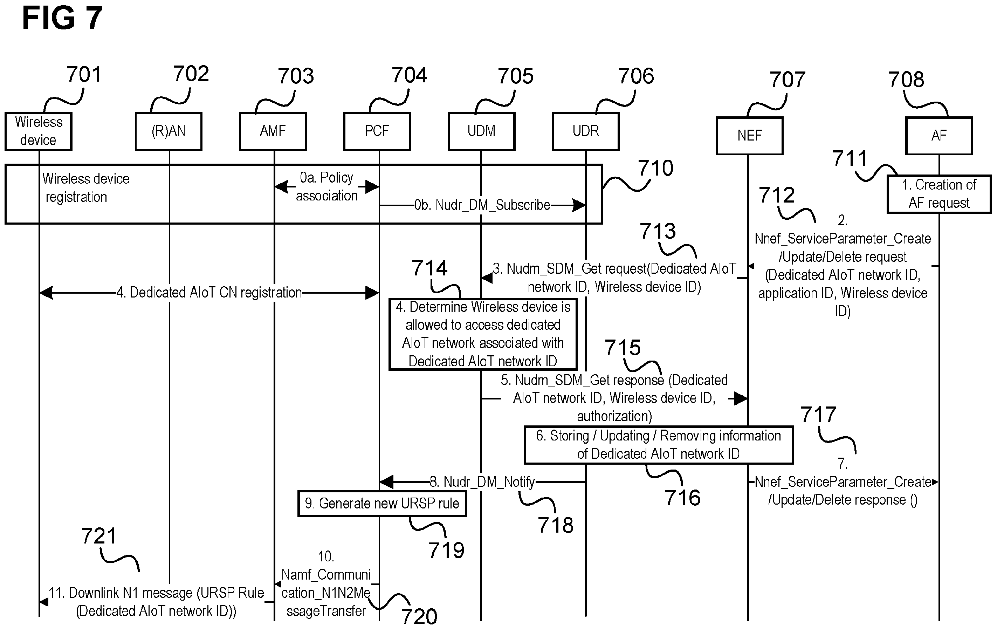

Figure 7 shows a message flow diagram 700 for the configuration of a UE (e.g. UE 601) with a URSP rule indicating to the UE (i.e. in particular an application running on the UE) the identity of a dedicated Ambient IoT core network to which to connect to communicate with one or more Ambient IoT devices.

A UE 701, a (radio) access network 702, an AMF 703, a PCF 704, a UDM 705, a UDR 706, a NEF 707 and an AF 708 are involved in the flow. The AMF 703, the PCF 704, the UDM 705, the UDR 706 and the NEF 707 are part of a mobile communication core network, e.g. the PLMN core network 602.

In 710, the UE 701 is registered in the PLMN core network. This includes policy association for the UE 701 by communication between the AMF 703 and the PCF 704 and a Nudr_DM_Subscribe of the PCF 704 at the UDR 706 to subscribe to notifications about changes in data related to the UE 701 stored in the Unified Data Repository (UDR) 706. This is then followed by a registration of the UE 701 in the Ambient IoT core network.

In 711, the AF 708 creates an AF request.

In 712, the AF 708 sends a request, e.g. an Nnef_ServiceParrameter_Create/Update/Delete request, to the NEF 707. This request (which is a request to configure an application on the UE 701 with the identification of an Ambient IoT network) includes an Ambient IoT network ID and an ID of the UE 701 (and possibly also an application ID of the application if that is considered, i.e. the indication of an Ambient IoT network is done per application).

In 713, the NEF 707 sends a request, e.g. an Nudm_SDM_Get request, according to the Nnef_ServiceParrameter_Create/Update/Delete request to the UDM 705 for information about access rights of the UE 601.

In 714, the UDM 705 checks whether the (identified) UE 601 is allowed to access the (identified) Ambient IoT network. It is assumed that this is true in the present example.

Accordingly, in 715, the UDM 705 sends a response, e.g. an Nudm_SDM_Get response according to the Nnef_ServiceParrameter_Create/Update/Delete request, to the NEF 707 authorizing that the UE 601 is allowed to access the Ambient IoT network.

In 716, the NEF 707 changes the information in the UDR 706 to indicate that the UE 601 should contact the Ambient IoT network and responds to (i.e. acknowledges) the Nnef_ServiceParrameter_Create/Update/Delete request in 717.

In 718, according to the change in the UDM 705 and the subscription of the PCF 704 at the UDM 705, the UDM 705 informs the PCF 704 about the changed information in the UDM 705, i.e. the Ambient IoT network ID.

In 719, the PCF 704 creates a URSP rule indicating that the Ambient IoT network identified by the Ambient IoT network ID should be contacted.

In 720, the PCF 704 transmits an indication of the URSP rule (in particular indicating the Ambient IoT network ID) to the AMF 703, e.g. with a Namf_CommunicationN1N2MessageTransfer, which forwards it to the UE 701 in 721, e.g. with a downlink N1 message.

According to the above message flow, the 708 can influence which dedicated Ambient IoT network an application running on a UE 701 should connect to. If an application is dependent on multiple dedicated Ambient IoT networks, the URSP rule may indicate several identities of dedicated Ambient IoT networks. In addition, when there are multiple dedicated Ambient IoT networks for one application, each dedicated Ambient IoT network can have a descriptor corresponding to a group of Ambient IoT devices present in that specific dedicated ambient IoT network. For example, the application may request connectivity to a certain dedicated Ambient IoT network based on an identity of an Ambient IoT device.

It should be noted that the call flow may be based on 3GPP TS 23.502 Service specific parameter provisioning in 4.15.6.7 and 4.2.4.3 UE configuration update.

For implementing the above message flow, the UDM subscription data for UEs may be extended to indicate which dedicated Ambient IoT networks are allowed to access.

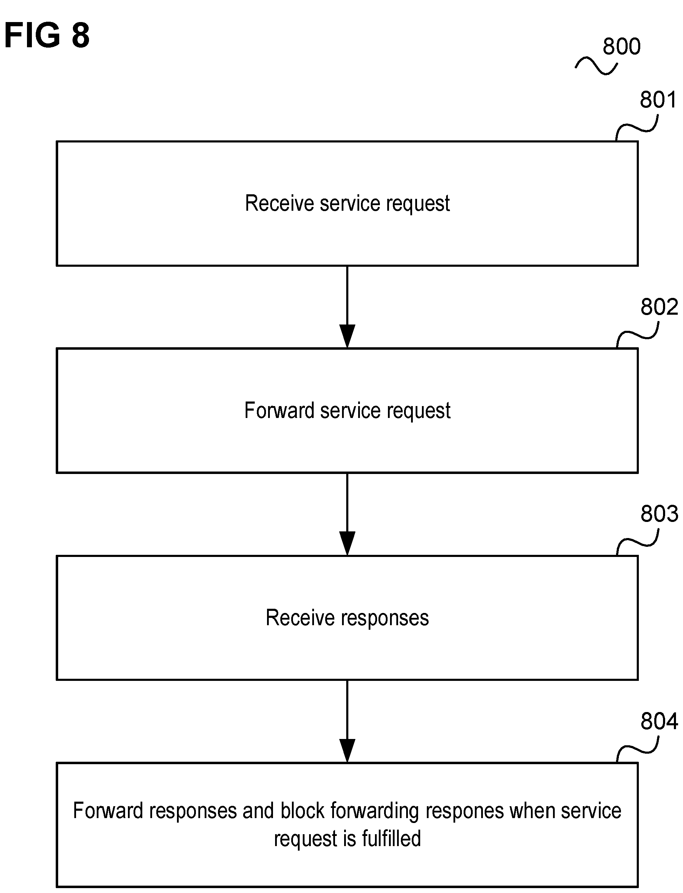

In summary, according to various embodiments, a method is provided as illustrated in figure 8.

Figure 8 shows a flow diagram 800 illustrating a method for collecting data from a plurality of (Ambient) Internet of Things devices according to an embodiment (such as identifications of Ambient IoT devices that are present, and/or sensor data provided by sensors with which the Ambient IoT devices are equipped such as temperature or pressure).

In 801, a (Ambient IoT) service (operation) request directed to the Ambient IoT devices (i.e. a message which triggers the provision of data by the Ambient IoT devices) is received by an Ambient IoT core network. This may be an explicit instruction to provide data but this can also be implicit like e.g. it may be a write instruction to write data to Ambient IoT device memories which triggers the sending acknowledgement by the Ambient IoT devices) from a mobile communication network (i.e. a PLMN as in the examples above) by an Ambient IoT core network.

In 802 the service request is forwarded by the Ambient IoT core network to the Ambient IoT devices. (This may mean that the Ambient IoT core network forwards the same (or a similar) message to the Ambient IoT devices. However, it may also mean that the Ambient IoT core network generates new messages (different from the one received) which specify the service request. In other words, it is not necessary that the Ambient IoT core network forwards exactly the same data it has received but it forwards the information specifying the service request (which is required to determine what service to perform).

In 803, responses to the service request are received from the Ambient IoT devices by the Ambient IoT core network.

In 804, the responses are forwarded by the Ambient IoT core network to the mobile communication network (to be further forwarded to an originator of the service request, e.g. a mobile terminal or an application function) and forwarding responses to the mobile communication network is blocked by the Ambient IoT core network in reaction to a determination that performing the service request has been completed (i.e. the service request has been handled).

According to various embodiments, in other words, Ambient IoT devices are deployed in a (dedicated) Ambient IoT network and applications can interact with the dedicated Ambient IoT network via an underlay (PLMN) network. The Ambient IoT core network may block redundant traffic from the Ambient IoT devices to reach the underlay PLMN network. Thus, provides separation between the Ambient IoT devices and the PLMN protecting the PLMN from an excess of signalling traffic (e.g. caused by a replay attack).

An Ambient IoT core network can be seen as a (central) infrastructure that supports a set of Ambient IoT devices, i.e. that supports an arrangement (or ecosystem) of (typically) a large number of Ambient IoT devices, wherein the Ambient IoT core network enables seamless connectivity and communication between these Ambient IoT devices. The Ambient IoT core network is for example configured to handle the unique requirements of Ambient IoT, such as ultra-low power consumption and the ability to manage a vast number of connected devices efficiently. It is (in contrast to the PLMN), for example a stand-along non-public network (with Ambient IoT functionality). An (Ambient IoT) functionality by the Ambient IoT core network is for example in particular the selection of a reader to contact a certain set of Ambient IoT devices (i.e. the determination of a reader suitable to communicate with one or more specified Ambient IoT devices).

The Ambient IoT core network may be configured as an overlay network for the mobile communication network (which is the underlay network in such a scenario).

The underlay network may be understood as that network in which user plane communication is established (e.g. a PDU session). The overlay network is the network which uses that user plane communication provided by the underlay network to provide a service of the overlay network.

The mobile communication network may access the Ambient IoT core network (and thus the Ambient IoT network comprising the Ambient IoT core network) via an interworking function of the Ambient IoT core network, e.g. a Non-3GPP Inter-Working Function, e.g. as described in TS 23.501 Annex D.3.

According to various embodiments, the mobile communication network may act as an application function towards the Ambient IoT core network.

As described above, in an AF-based embodiment, an AF (for an Ambient IoT service request) communicates with the PLMN (underlay network), the PLMN acts as AF towards dedicated Ambient IoT network (overlay network), the dedicated Ambient IoT network performs the respective AIoT service request and responds with an Ambient IoT service response message towards the PLMN (underlay network) acting as an AF towards the PLMN, the PLMN forwards the Ambient IoT service response message to the AF (which has originated the an Ambient IoT service request).

Further, as described above, in a UE based embodiment, a UE connects to a PLMN for normal services, via the PLMN the UE connects to the dedicated Ambient IoT network (overlay network) via Non3GPP access e.g., N6 towards N3IWF of the dedicated Ambient IoT network, registers with the dedicated Ambient IoT network and sends an Ambient IoT service request to the overlay network. Here, a direct connection to an AIOTF in the dedicated Ambient IoT network is also possible.

The approaches described above allow providing Ambient IoT services and minimizing the risk of impacting other services being delivered by the operator. If security requirements are different for UEs and Ambient IoT devices, the Ambient IoT core network acts as a separation layer avoiding degradation of overall security posture. A customer can outsource access and security aspects largely to an operator.

Thus, the approaches describe above allows operators to provide Ambient IoT services to customers with less risk of impacting existing services. Ambient IoT devices can be deployed in dedicated Ambient IoT networks on behalf of customers and customers may interact with their dedicated Ambient IoT network(s) via a PLMN for easy reachability, where the dedicated Ambient IoT network acts as an overlay network.

According to the UE-based approach, an application running on a UE can interact with an AIOTF to request Ambient IoT services (without need for an AF to interact with the AIOTF). In addition, with the overlay and underlay concept, the dedicated Ambient IoT network can be easily reached. A URSP rule can be used to dynamically change dedicated Ambient IoT network used by an application running on a UE.

The method of figure 8 may be carried out by a communication system component (in particular an Ambient IoT network controlling component, which may also comprise multiple interconnected sub-components) which may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for collecting data from a plurality of Internet of Things devices, comprising:
Receiving, by an Ambient Internet of Things core network, a service request directed to the Ambient Internet of Things devices from a mobile communication network by an Ambient Internet of Things core network;
Forwarding, by the Ambient Internet of Things core network, the service request to the Ambient Internet of Things devices;
Receiving, by the Ambient Internet of Things core network, responses to the service request from the Ambient Internet of Things devices; and
Forwarding, by the Ambient Internet of Things core network, the responses to the mobile communication network and blocking, by the Ambient Internet of Things core network, forwarding responses to the mobile communication network in reaction to a determination that performing the service request has been completed.

2. The method of claim 1, wherein the mobile communication network acts as underlay network for an Ambient Internet of Things network comprising the Ambient Internet of Things core network and wherein the Ambient Internet of Things network acts as overlay network.

3. The method of claim 1 or 2, wherein the mobile communication network acts as an application function towards the Ambient Internet of Things core network and/or the Ambient Internet of Things core network treats the mobile communication network as an application function.

4. The method of any one of claims 1 to 3, wherein the Ambient Internet of Things core network acts as an application function towards the mobile communication network and/or the mobile communication network treats the Ambient Internet of Things core network as an application function.

5. The method of any one of claims 1 to 4, wherein the service request is a request to read data from and/or write data to the Ambient Internet of Things devices and/or a request for the Ambient Internet of Things devices to identify themselves.

6. The method of any one of claims 1 to 5, comprising receiving the service request by the Ambient Internet of Things core network from an application function via the mobile communication network.

7. The method of any one of claims 1 to 6, comprising receiving the service request by the Ambient Internet of Things core network from a mobile terminal via the mobile communication network.

8. The method of any one of claims 1 to 7, comprising configuring the mobile terminal with one or more Ambient Internet of Things network identifications to which it should direct Ambient Internet of Things service requests.

9. The method of claim 8, comprising configuring the mobile terminal with one or more Ambient Internet of Things network identifications by means of a routing policy rule.

10. The method of any one of claims 1 to 9, comprising receiving the service request from the mobile communication network by the Ambient Internet of Things core network via a network exposure function of the mobile communication network and a network exposure function of the Ambient Internet of Things core network and forwarding the responses from the Ambient Internet of Things core network to the mobile communication network via the network exposure function of the Ambient Internet of Things core network and the network exposure function of the mobile communication network.

11. The method of any one of claims 1 to 10, comprising determining that the service request has been fulfilled in reaction to a predetermined time window for receiving responses to the service request having elapsed, the forwarded responses fulfilling a service request fulfilment criterion and/or a predetermined number of responses to the service request having been forwarded by the Ambient Internet of Things network.

12. The method of any one of claims 1 to 11, wherein the blocking of forwarding of responses is performed by an Ambient Internet of Things function of the Ambient Internet of Things core network or an Access and Mobility Management Function of the Ambient Internet of Things core network.

13. The method of any one of claims 1 to 12, comprising, in reaction to the reception of the service request, storing a transaction identification specifying an instance of the service request by the Ambient Internet of Things core network, forwarding the responses from the Ambient Internet of Things network to the mobile communication network as long as the transaction identification is still stored and not marked as handled and deleting the transaction identification or marking the transaction identification as handled in reaction to determining that the service request has been completed.

14. An Ambient Internet of Things network controlling component, configured to perform the method of any one of claims 1 to 13.
